# EUROPEAN PATENT SPECIFICATION

(11) **EP 3 930 974 B1**
(45) Date of publication and mention of the grant of the patent: **22.01.2025**
(21) Application number: 20713750.6
(22) Date of filing: 17.02.2020
(51) Int. Cl.: B26D 7/06, B26D 7/32, B26D 3/16, B65B 35/40, B65B 25/14, B65G 54/02, B65G 47/84, B65G 47/08, B65G 47/28

(54) **SYSTEM AND OPERATING METHOD FOR PACKAGING PAPER ROLLS**
SYSTEM UND BETRIEBSVERFAHREN ZUM VERPACKEN VON PAPIERROLLEN
SYSTÈME ET PROCÉDÉ DE FONCTIONNEMENT POUR EMBALLER DES ROULEAUX DE PAPIER

(30) Priority: 27.02.2019 IT 201900002851
(43) Date of publication of application: 05.01.2022
(73) Proprietor: Plusline S.r.l., 40069 Zola Predosa (BO) (IT)
(72) Inventor: GERRI, Vittorio, 40100 Bologna (IT)
(74) Representative: Mincone, Antimo
(86) International application number: PCT/IT2020/050029
(87) International publication number: WO 2020/174504

(56) References cited:
- EP-A1- 2 743 192
- EP-A1- 3 053 443
- EP-A1- 3 431 420
- JP-U- H0 554 433
- US-A1- 2006 130 435
- US-A1- 2008 017 003
- US-A1- 2015 375 878

## Description

The present invention relates to a system and an operating method for packaging paper rolls.

In particular, although not exclusively, the present invention relates to the packaging of rolls of toilet paper and rolls of paper for domestic use such as kitchen towels and similar products.

It is known that the production of paper rolls of the type mentioned above requires the use of machines and equipment arranged along a line that generally comprises at least one tube-forming machine for producing cardboard tubes or "cores" on which the paper of the rolls is wound, one or more unwinders in which are arranged the parent reels from which the plies forming the paper web destined to be wound on the cardboard tubes is unwound, an embossing unit for embossing the web formed by the plies fed by the unwinders, a rewinder in which the web is wound on the cores to form logs having a predetermined diameter, a cutting machine that divides the logs into rolls of predetermined length, and a buffer store placed between the rewinder and the cutting machine. The rolls coming out of the cutting machine feed a packaging line that, in general, comprises a group of conveyors through which the rolls are transported to a unit for forming the packages or "packaging machine" where, cyclically, the rolls are grouped in a predetermined number, possibly on several layers, and wrapped with a film of plastic material which is folded and welded around the rolls previously grouped in groups to form a package. Said conveyors are generally formed by conveyor belts parallel to each other, each of which can be divided into several sections of different length. These conveyors, in addition to performing the function of connection between the cutting-off machines and the packaging machines, are buffers allowing the feeding of the packaging machines continuously regardless of the production of the cutting-off machines that generally have a different production in relation to the packaging machines.

US 2008/017003 A1 discloses a cutting machine for the production of paper rolls by transversal cutting of paper logs according to the preamble of claim 1.

EP2743192A1 discloses a plant for packaging containers for liquid substances, in particular substances for food use such as fruit juices, milk, wine or sauces. Said containers are parallelepiped food containers fed in a vertical position by a conveyor arranged upstream of a unit that separates them, distancing them from each other, and subsequently delivers the containers to a further unit that groups the containers previously spaced in lots of predetermined number. The second unit comprises a series of blades that, acting in pairs formed from time to time by a front and a rear blade which come into contact with the lateral surface of the containers, form the lots, bringing them to an exit point at which a manipulator picks up the lots and transfers them to another area of the plant without further intervention of the blades.

EP3431420A1 discloses a system for grouping a predetermined number of sausages oriented transversely to an advancement direction defined by a conveyor above which is arranged a grouping unit equipped with a series of blades that, according to their speed with respect to the speed at the underlying conveyor, determine the required grouping. Said blades are configured to act on the lateral surface of the products to be grouped which are free to roll on the conveyor being oriented perpendicularly to the advancement direction.

EP3431420 discloses a device for grouping products aligned along rows oriented transversely to an advancement direction defined by an underlying conveyor. The grouping device comprises a plurality of blades configured to act on the lateral surface of the products so that each blade engages all the products of a same row.

A drawback of the known type of paper roll packaging systems lies in the need to have very large spaces to realize the connections between the cutting machines and the packaging machines. Typically, in fact, these connections develop along paths whose length is of the order of ten meters. In addition, in order to ensure a correct guidance of the rolls along such long paths, it is necessary to engage the rolls also laterally, as well as from below, which, depending on the paper used to form the rolls, can cause damages to the rolls with the consequent need to discard a relatively large number of rolls.

The main purpose of the present invention is to provide a system for packaging paper rolls dimensionally more compact than conventional systems and, at the same time, able to be effectively integrated with the cutting-off machines available on the market and to interface with existing packaging machines , without the need to make changes to the production cycles of the rolls or to the rolls packaging processes and preserving the integrity of the rolls, particularly in the phase of formation of the groups of rolls that feed the packaging machines.

This result has been achieved, in accordance with the present invention, by providing a system and implementing an operating method having the features indicated in the independent claims. Other features of the present invention are the subject of the dependent claims.

Thanks to the present invention, it is possible to provide a line for packaging paper rolls that is dimensionally more compact than the existing paper rolls packaging lines, with the advantage of requiring relatively small spaces for the line itself, which can be effectively integrated with the cutting machines that produce the rolls and is capable of ensuring the handling of rolls and groups of rolls intended for packaging without damaging them. Furthermore, a system according to the present invention involves relatively low implementation costs in relation to the advantages that the system offers.

These and further advantages and features of the present invention will be more evident to the skilled in the art from the following description and the attached drawings provided by way of example but not to be considered in a limitative sense, in which:
- Fig.1 is a schematic front view of a system according to the present invention;
- Fig.2 is a section view along line A-A of Fig.1;
- Fig.3 is a section view along line B-B of Fig.1;

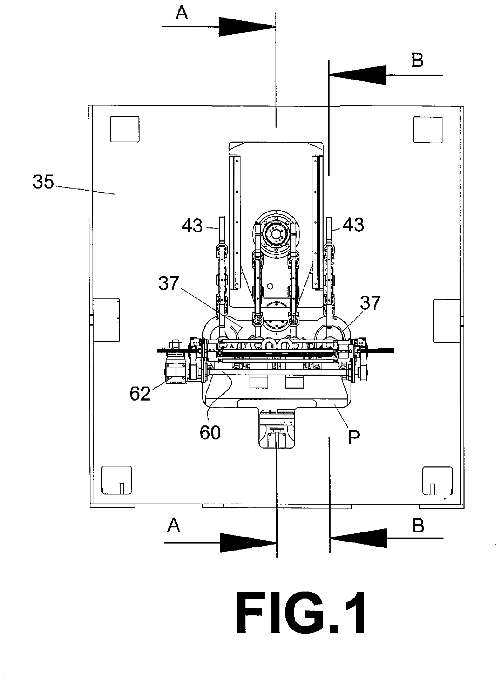

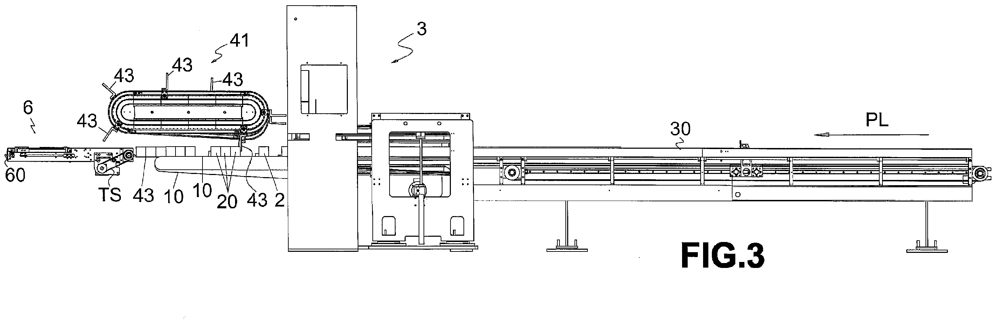

- Fig.3 is a top view of the system shown in Fig.1;

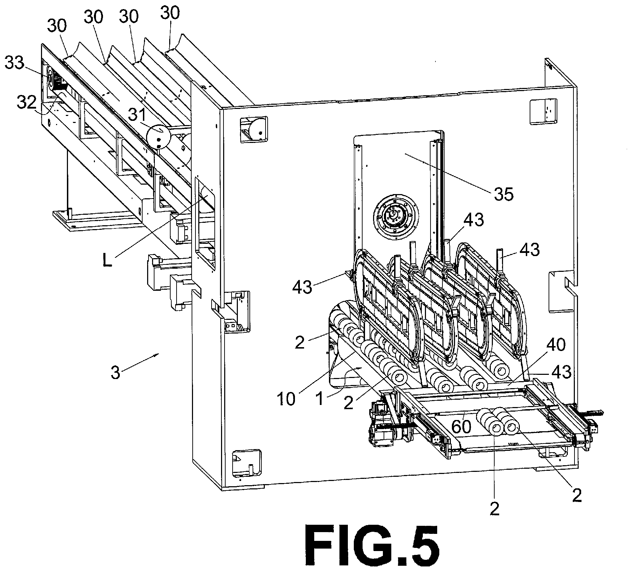

- Fig.5 is a schematic perspective view of the system shown in Fig.1;

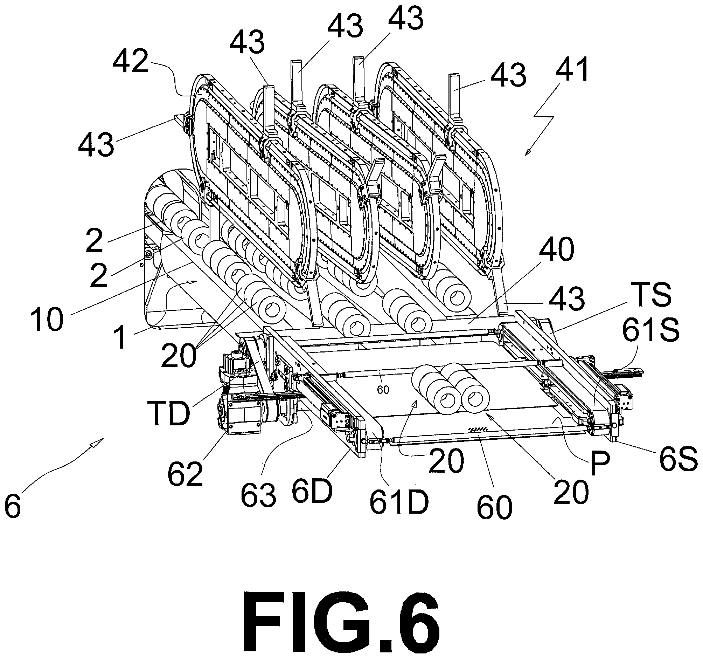

- Fig.6 is a detail of Fig.5;

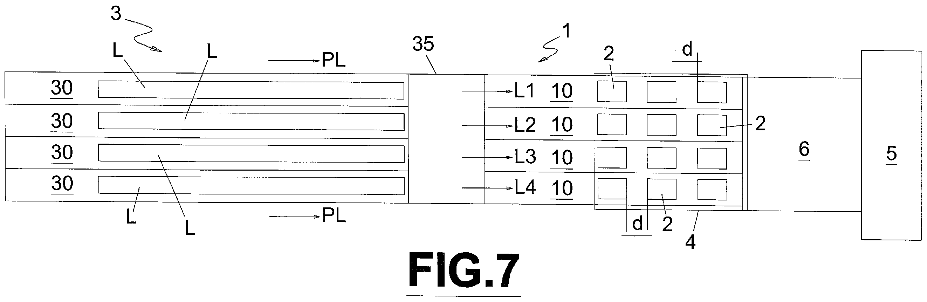

- Fig.7 is a schematic top view of a system according to the present invention in which some parts are omitted to better show other parts;

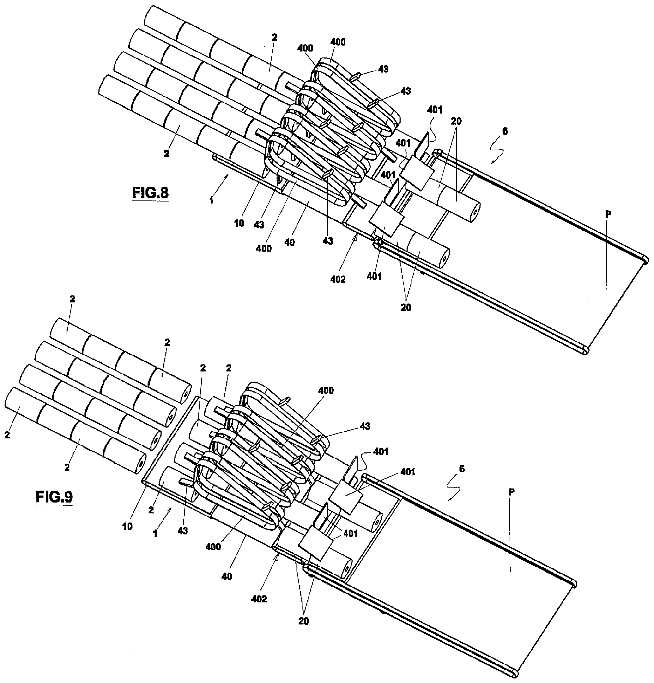

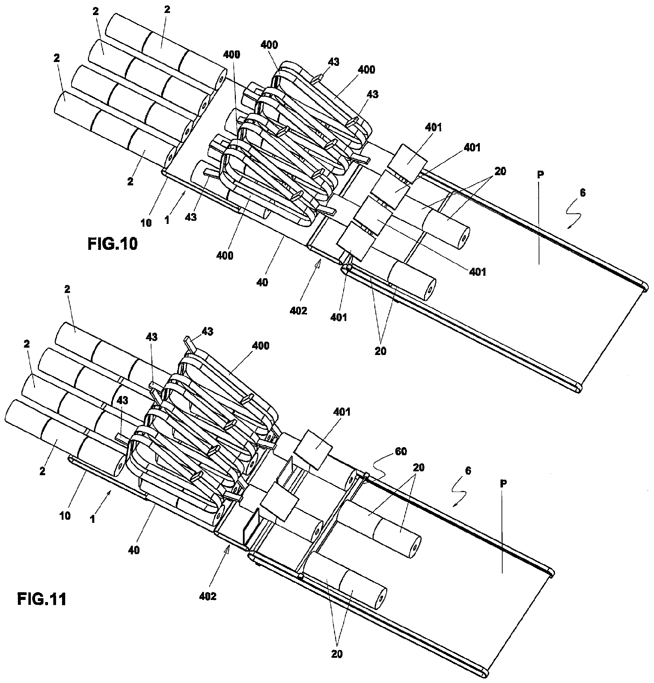

- Figs.8-11 show another embodiment of a system according to the present invention.

Reduced to its essential structure and with reference to the example shown in the attached drawings, a system for packaging paper rolls in accordance with the present invention comprises a separator device (1) suitable for spacing the paper rolls (2) coming from a cutting-off machine (3) and intended to feed a device (4) which forms groups (20) of rolls destined to a packaging machine (5). The cutting machine (3) is a machine, known per se, which divides the logs produced by a rewinder (not visible in the drawings) into rolls (2) of predetermined length. Said rolls come out aligned one next to the other from an output station of the cutting-off machine. The separator device (1) separates each roll coming from an output line (L1, L2, L3, L4) of the machine (3) from the immediately following roll (2) of the same output line. In this way, each roll (2) that comes out of an exit line of the cutting-off machine (3) will be spaced by a predetermined value from the roll which follows it along the same output line. The device (4) is used to form the groups of rolls (2) aligned and close to each other in a predetermined number along the directions of the respective output lines. The packaging machine (5) is used for packaging the rolls (2) previously grouped by the device (4) that forms the groups (20).

With reference to the example shown in the attached drawings, the cutting-off machine (3) is of the type comprising a plurality of horizontal feeding channels (30) along which the logs (L), previously loaded on the cutting-off machine, are advanced in parallel rows by means of pushers (31) acting on the back of the logs and are driven by belts or annular chains (32) arranged under the channels (30) and moved by a corresponding drive unit (33). Downstream of said channels (30), means for gripping and moving the logs (L) are provided which, in the example shown in the drawing, are made up of pairs of opposed belts (34), with a pair of belts (34) for each channel (30). Downstream of said belts (34) there is a log cutting unit (35) comprising a blade (36) and a log holding mechanism for holding the logs during the cutting phase that, in the example shown in the drawings, consists of a series of presses (37). A cutting-off machine thus configured is described for example in EP1615753. Once the logs (L) have been loaded on the channels (30) of the cutting-off machine, the pushers (31) and the belts (34) in cooperation with each other determine the advancement of the same logs, with steps of a length corresponding to the length of the rolls (2) to be formed. At each step, the blade (36) is activated while the presses (37) are arranged in locking position of the front parts of the logs (parts opposite to those subject to the action of the pushers 31) upstream and downstream of the blade (36). The actuation of the blade (36) determines the obtaining of a roll (2) from each log. For example, if the channels (30) are four in number and there is a log (L) on each channel, the actuation of the blade (36) determines the formation of four rolls (2) each time. After cutting, the presses (37) release the rolls thus formed which, pushed by the logs which in turn are advanced by one step by the pushers (31) and by the belts (34), advance to come out of the cutting machine (3). The channels (30) in which the logs are positioned (L) are oriented transversely with respect to the blade (36) which produces the rolls (2) by transversely cutting the logs. The blade (36) acts in a plane orthogonal to the direction (PL) from which the logs (L) come. As shown in the diagram in Fig. 7, the rolls (2) come out of the cutting-off machine (3) along the output lines (L1, L2, L3, L4) parallel to the direction (PL) of advancement of the logs in the channels (30). In other words, at the exit from the cutting-off machine (3), the rolls (2) are aligned along their respective exit lines (L1, L2, L3, L4). The longitudinal axis of each roll (2) that comes out of the cutting-off machine is horizontal, so that the front and rear bases of the roll determined by the transverse cut of the respective log are both oriented vertically.

The mechanism controlling the step by step advancement of the logs (L) in the channels (30), which in the example described above is made by the belts (34) cooperating with the pushers (31), allows, if necessary, to interrupt the production of the rolls (2) without necessarily having to stop the blade (36). In other words, since the cutting-off machine (3) is equipped with a log movement mechanism (3), if necessary, the production of the rolls (2) can be stopped simply by stopping the belts (34) so that the blade (36) can also continue its rotation.

In practice, said "Tt" the time between two consecutive cuts normally executed by the blade (36), and said "Tₛ" the time required for stopping the blade (34), Tₛ is lower than Tₜ: Tₛ<Tₜ.

It is understood that the cutting-off machine can be equipped with any other mechanism controlling the step by step advancement of the logs (L).

Preferably, the logs (L) are already trimmed logs, so that only rolls (2) intended for packaging and not trimmings are available at the exit of the cutting-off machine (3). A system for producing rolls with already trimmed logs is described in EP1539440. If, on the other hand, the cutting-off machine (3) receives untrimmed logs, it is possible to arrange a trim-rejecting device, known per se, at the exit of the cutting-off machine.

With reference to the example shown in the attached drawings, the separator device (1) consists of a plurality of conveyor belts (10) mounted downstream of the cutting station of the cutting-off machine (3), i.e. downstream of the station of the cutting-off machine where the blade (36) is positioned. Each conveyor belt (10) always has an upper section at a respective exit line of the rolls (2) from the cutting-off machine (3). Each belt (10) is wound on respective pulleys operated by a corresponding drive unit such that the upper section of the same belt moves according to the direction (L1, L2, L3, L4) of exit of the rolls (2) from the cutting-off machine. The rolls (2) coming out of the cutting-off machine (3) can therefore be taken over by the belts (10). In practice, each roll (2), after its formation, passes on the upper section of a corresponding conveyor belt (10), detaching itself from the roll formed subsequently by the log present on the same channel (30) of the cutting-off machine due to the movement of the respective belt (10). In this way, the separation of each roll (2) from the roll which follows it and which is obtained from the same log is accomplished. On each conveyor belt (10) the rolls (2) advance according to the respective exit directions (L1, L2, L3, L4), spaced from each other by a value related to the speed of the belt (10) and therefore related to the speed of advancement of the upper section of the latter.

In other words, between each roll present on the upper section of each belt (10) and the roll that follows it and which is obtained from the same log (L) there is a predetermined gap. The separator device therefore serves to ensure that the rolls (2) of each exit line (L1, L2, L3, L4) are suitably spaced from each other to allow a more effective intervention on the rolls themselves in the subsequent groups formation phase. In said separator device the orientation of the longitudinal axis of the rolls (2) does not undergo variations, i.e. the rolls (2) come out of the separator device oriented as they exit from the cutting-off machine, with the longitudinal axis horizontally oriented and the front and rear bases vertically oriented.

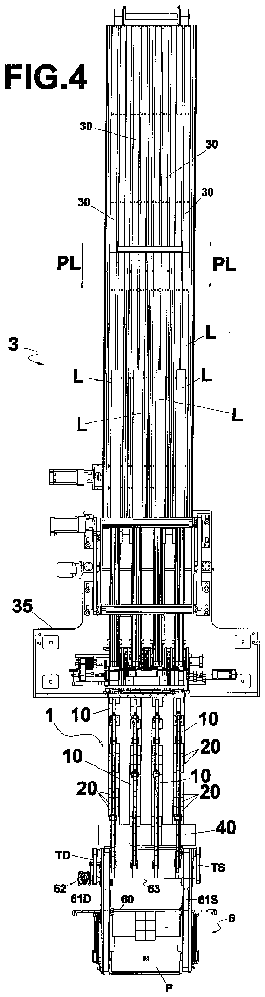

With reference to the example shown in Figs. 1-7, the device (4) for forming the groups (20) comprises a fixed horizontal surface (40) arranged downstream of the separator device (1) with respect to the direction followed by the rolls (2) exiting the cutting-off machine. In accordance with the example shown in the drawings, said fixed surface (40) is a horizontal surface extending transversely to the belts (10) downstream of the latter.

The fixed surface (40) constitutes an example of embodiment of a temporary slowdown surface with which each roll (2) transported by the respective belt (10) interacts and on which the rolls (2) is subjected to slowdown.

Above the belts (10) an operating unit (41) is mounted comprising a plurality of actuators (42) on each of which multiple blades (43) are mounted in an annular configuration. For example, each actuator (42) is a linear motor annular track on which several carriages are mounted, each of which carries a corresponding blade (43). For example, each actuator (42) can be a conveyor available on the market under the trade name Beckhoff XTS series. In accordance with the example shown in the drawings, an actuator (42) is provided for each of the channels (30) of the cutting-off machine (3), i.e. an actuator (42) with respective blades (43) is provided above each of said belts (10).

Each actuator (42) has a lower forward section, opposite and parallel to the respective belt (10), along which the blades (43) move following the direction followed by the rolls (2), and an upper return section along which the blades (43) move in the opposite direction.

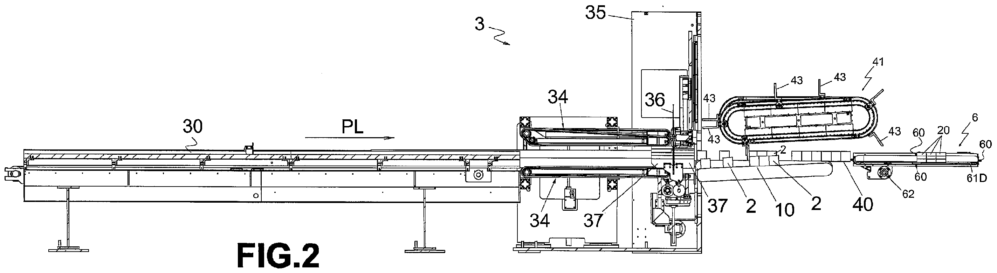

On the fixed surface (40) begins the formation of groups (20) of rolls (2) placed one behind the other without a gap. Each group (20) is formed by a predetermined number of rolls (2) queued according to the respective directions of origin, i.e. by a predetermined number of rolls (2) arranged along a direction coinciding with the longitudinal axis of the same rolls and with the respective output line (L1, L2, L3, L4), so that the front base of a roll faces the rear base of the roll that precedes it. In the example shown in Figs. 2-6, each group (20) consists of three rolls (2). Since the belts (10) carry the rolls (2) produced by cutting several logs side by side in the cutting-off machine (3), on the surface (40) the formation of multiple side by side positioned groups (20) of rolls (2) may begin. The groups (20) are parallel to each other, i.e. they are arranged side by side as the logs in the cutting-off machine (3).

Cyclically, the belts (10) lead the rolls (2) to the surface (40), where the rolls stop immediately after the loss of contact with the belts (10) because the surface (40) is fixed. Furthermore, cyclically, when on any belt (10) there is a number of rolls (2) corresponding to a group (20), a blade (43) of the respective actuator (42) exerts a push on the last roll of the group, thus causing the compaction of the rolls of the group (20) and the translation of the group batch over the surface (40). Then, the blade returns on the upper side of the unit (41) and moves back along said return section. Downstream of the surface (40) there is the conveyor (6), further described below, which receives the groups (20) and moves them towards the packaging machine (5).

Depending on the packages to be made in the downstream packaging machine, the blades (43) can be differently operated above the belts (10). For example, if there are groups (20) of rolls on the belts (10) and if a pack with two rows of rolls (2) is to be formed, two actuators (42) will move the respective blades (20) at greater speed on the surface (40) to feed the conveyor (6) whose speed determines the number of rolls of the pack or the number of layers of the pack. For example, if packaging of the rolls in the form of packages containing two groups (20) or in the form of packages formed by layers of two groups (20) is required, two actuators (42) will be faster than the other two.

Downstream of the groups formation unit (41), a conveyor (6), commonly said "bar towing", is positioned, which moves the groups (20) away from the unit (41) and transports them to the packaging machine (5) that is located downstream and receives the groups (20) by means from the conveyor (6). The latter is a device known per se. With reference to the example shown in the drawings, the conveyor (6) comprises a plurality of bars (60) oriented transversely to the direction (PL) of origin of the groups (20), spaced from each other by a pitch of predetermined value and constrained to two parallel annular belts (61D, 61S) located on the right and left sides (6D, 6S) of the conveyor (6) and operated by a corresponding actuator (62). Between the right and left sides of the conveyor there is a plane (P) on which the groups (20) move forward pushed from the back by the bars (60). In accordance with the example shown in the drawings, the belts (61D, 61S) are wound on corresponding guide pulleys arranged both on the rear side of the conveyor (6), i.e. on the side facing the unit (41), and on the side front. In this example, the actuator (62) is a gearmotor located on the right side (6D) of the conveyor (6). Said gearmotor is connected to the belt (61D) by means of a first toothed belt (TD) and is connected to the belt (61S) by means of a second toothed belt (TS) driven through a shaft (63) passing transversely below the aforementioned plane (P). The belts (61D, 61S) always have an upper section and a lower section that are respectively above and below the plane (P) and are longer than the latter. Therefore, the bars (60) move cyclically above and below the plane (P). When moving above the plane (P), the bars (60) push the groups (20) that, consequently, move on the plane (P) towards the packaging machine (5) arranged downstream. In the return stroke, after passing the front edge of the plane (P), the bars (60) move below the latter. Above the plane (P), known guides oriented according to an exit direction of the groups (20) can be provided.

The conveyor (6) is synchronized with the unit that forms the groups (20).

The rolls (2) produced by the cutting-off machine (3) and coming from a same log are spaced from each other by means of the separator (1). This operation is performed in parallel for all rolls (2) exiting the cutting-off machine, that is, for all the rolls produced by cutting the logs loaded on the feeding channels (30) of the cutting-off machine. Sequentially, groups of rolls are formed on the belts (10) of the separating device (1), consisting of a predetermined number of rolls (2) aligned according to the respective directions (L1, L2, L3, L4) of origin and placed next to each other as previously said. When the predetermined number of rolls (2) constituting a group (20) is reached on any belt (10), a blade (43) of the corresponding actuator (42) intercepts the rear base of the last roll of the group and pushes the whole group until it enters the conveyor (6). When the blade (43) releases the last roll of the group, a bar (60) of the conveyor (6) takes the place of the blade and the group is brought to the packaging machine (5) which is positioned downstream and carries out the packaging of the group according to known methods. Therefore, downstream of each output line of the cutting-off machine (3) there is never accumulation, or stop, of rolls (2) in a number greater than the number of rolls that make up a corresponding group.

In practice, with reference to the example shown in the drawings, the unit (4) is an acceleration and formation mechanism of the individual groups since the individual groups initially slow down on the surface (40) and following the intervention of the blade (43) they reach a speed corresponding to that of the conveyor (6). In other words, the rolls (2) can be subject to slowing down on the surface (40). The packaging machine (5) that receives the groups (20) to be packed is a machine known per se.

Therefore, the present invention relates to a system for packaging groups (20) of paper rolls (2) obtained by cutting paper logs (L) with a cutting-off machine (3), wherein:
- the cutting-off machine (3) has a predetermined number of channels (30) in which the logs (L) are moved along a predetermined advancement direction (PL) and a cutting unit that cuts the logs in a transverse direction with respect to said direction (PL) producing rolls (2) according to a predetermined cutting rate, the cut determining the formation of a rear base and a front base for each roll (2), said rear and front bases being vertically oriented, i.e. oriented orthogonally to the longitudinal axis of the rolls (2),
- the rolls (2) produced by the cutting-off machine (3) exit from the latter along exit lines (L1, L2, L3, L4) whose number is equal to the number of said channels (30) and that are oriented each parallel to said direction (PL),
- each group (20) consists of a predetermined number of rolls (2) obtained from a same log (L) and positioned close to each other and one behind the other and aligned along the advancement direction (PL) of the logs (L) from which the rolls are obtained,
and wherein, downstream of the cutting-off machine (3), there are:
- a first unit (1) adapted to arrange the individual rolls (2) spaced apart from each other by a predetermined amount (d) along the respective exit lines (L1, L2, L3, L4), said first unit being provided with a surface (10) on which the rolls (2) are positioned one at a time when they exit from the cutting machine (3) and that moves them along their respective exit lines (L1, L2, L3, L4), distancing each roll (2) from the one following it in the respective exit line;
- a second unit (4), cooperating with the first unit (1), adapted to form the groups (20) by grouping a predetermined number of rolls (2) previously spaced by the first unit (1) in order to produce groups (20) of rolls (2) each consisting of a predetermined number of rolls (2) possibly placed one behind the other, said second unit (4), being provided with blades (43) connected with respective independent actuators (42) that move them along an annular path that has always a section that is parallel to a transit surface (10; 40) on which the rolls (2) are free to pass, such that each blade (43) is adapted to push from the back the last roll of each group to be formed and each formed group as the individual groups are formed by exerting a pushing action on the rear base of said last roll while the front base and a lateral surface of each roll (2) are free;
- a third unit (6), located downstream of the second unit (4) in relation to said direction (PL), adapted to convey the groups (20) towards a packaging machine (5) provided downstream and adapted to receive the groups (20) formed by the second unit (4).

Since, as previously mentioned, each blade (43) pushes the respective groups (20) towards the conveyor (6) as the individual groups(20) are formed, downstream of each exit line of the cutting-off machine (3) there is never accumulation, or stop, of rolls (2) in a number greater than the number of rolls that make up a corresponding group. Furthermore, in accordance with the present invention, it is possible to provide an integrated system in which the cutting-off machine (3) is integrated in the packaging line and where on each output line (L1, L2, L3, L4) there is s never accumulation, or stop, of rolls (2) in a number greater than the number of rolls that make up a corresponding group and in which it is possible to use a cutting-off machine in which the logs (L) are moved step by step along the respective channels, such that the cut of the logs can be interrupted without the need to accumulate rolls (2) at the exit of the cutting-off machine as previously described. The belts (34) arranged upstream of the cutting station in cutting-off machine (3) are an example of how a log movement mechanism (L) can be made. The separator (1) can be integrated with the cutting-off machine (3), forming its final exit section, such that the cutting-off machine (3) produces rolls (2) which, on each exit line (L1, L2, L3, L4) , are spaced apart from each other by a predetermined value (d) allowing the blades (43) of the unit (4) to operate as previously described.

An integrated system according to the present invention can be realized, for example, by using a single controller that controls the actuators of all the units of the system so that, for example, if the second unit or the third unit of the system is stopped, for example for a failure of a relative actuator or a jam of the rolls inside these units, the cutting-off machine is also stopped, so that the rolls (2) are not produced if it is not possible to form the groups of rolls downstream of the cutting-off machine.

In accordance with the present invention, it is not necessary to provide systems for the accumulation of groups (20) of rolls (2) upstream of the packaging machine (5), which allows significant savings in terms of space required for the system that, consequently, can be installed in smaller spaces than those required by conventional systems. Furthermore, it is not necessary to engage the rolls (2) also laterally, that is, it is not necessary to clamp them, so the integrity of the rolls (2) is preserved.

In accordance with the embodiment shown in Figs. 8-11, the aforementioned second unit (4) comprises a series of belts (400) closed in a loop along respective triangular paths, with a substantially horizontal section facing the surface (40 ) on which the groups (20) are formed, an ascending section (in the drawings from right to left) and a descending section (substantially vertical in the drawings) shorter than the ascending section. On each belt (400) a predetermined number of blades (43) are applied which perform the function previously described. The belts (400) are motorized individually by means of respective electric motors (not visible in the drawings). The blades (43) are mounted at predetermined points on each belt (400). The function of these blades is identical to that indicated for the example previously described. The length of the horizontal forward part of the belts (400) is less than the overall length of the ascending and descending return sections. In this example, for each line (L1, L2, L3, L4) there is a pair of parallel belts (400) with respective blades (43), the number of which will be commensurate with the overall length of the belts themselves. Furthermore, for each groups formation line there is a temporary stop surface (401) connected to a rotary actuator which arranges it in the lowered stopping position and in the raised position for the allowed passage of the groups (20) respectively. In this example, the surface on which the groups (20) are formed consists of the fixed horizontal plane (40) arranged downstream of the belts (10) of the unit (1). Furthermore, in this example, a conveyor belt (402) is arranged downstream of the fixed surface (40) which acts as a bridge between the fixed surface (40) and the conveyor (6), and the surfaces (401) are arranged upstream of the conveyor (6). In the drawings, the actuators which control the rotation of the surfaces (401) are not visible and the surfaces (401) are shown partly raised and partly lowered. When lowered (position substantially orthogonal to the direction of movement of the rolls 2), the surfaces (401) prevent the translation of the rolls (2) towards the conveyor (6). Conversely, when raised, the surfaces (401) leave a gap between them and the underlying belt (402) which can be crossed by the rolls (2) directed towards the conveyor (6). According to the present invention, it is possible to execute a process in which:
- by using a cutting-off machine (3), paper rolls (2) are produced by transvers cutting of logs (L) of paper material according to a predetermined cutting rate and the rolls of paper (2) thus produced come out of the cutting machine (3) along several parallel exit lines (L1, L2, L3, L4), the cut determining the formation of a rear base and a front base for each roll (2), said rear and front bases being vertically oriented, i.e. oriented orthogonally to the longitudinal axis of the rolls (2);
- immediately downstream of the cutting-off machine (3) each paper roll (2) is spaced by a preset value (d) from the paper roll that follows it in the respective exit line (L1, L2, L3, L4);
- on each exit line (L1, L2, L3, L4) groups (20) are formed each comprising a predetermined number "N" of paper rolls (2) close to each other by temporarily slowing down "N-1" rolls of each group (20) by using a slowdown surface (40) that temporarily slowdown said "N-1" rolls, and possible approaching of the "N-1" rolls to the first rolls if N>1, the approaching of the "N-1" rolls to the first roll being executed by means of a pusher (43) which exerts a thrust on the last roll of the group;
- each group (20) is transferred to a conveyor (6; 402) by the same pusher (43) used for forming the group;
- by means of the conveyor (6) the groups (20) are transferred to a groups packaging machine (5).

It goes without saying that if N = 1, that is, if the group is made up of only one roll (2) intended to be individually packaged, the aforesaid approaching step operated by means of the pusher (43) is not foreseen. However, the pusher (43) determines the transfer of the only roll to the conveyor (6) .

In the example described above it is N = 3, so that on each output line (L1, L2, L3, L4) groups (20) are formed, each consisting of three rolls of paper (2) approached one behind the other by temporarily slowing down two rolls of each group (20), using the surface (40) which determines the temporary slowing of said two rolls, and the group is definitively formed by placing the third roll next to the first two by means of the corresponding pusher (43) which exerts a push on the third roll of the group.

In accordance with the present invention, the use of intermediate buffers of the type commonly used in traditional systems, in which there is the accumulation of considerable quantities of rolls upstream of the packaging machine, can be avoided.

Furthermore, in accordance with the present invention, the groups (20) are formed and are moved using means (which in the examples described above are the blade-shaped pushers 43 and the bars 60) acting only on the back of the paper rolls and not on the sides as in traditional systems. Therefore, the rolls (2) are not subject to lateral pressure and crushing.

In accordance with the examples previously described, it is possible to achieve an effective integration of the various units of the system by placing the unit (1) immediately downstream of the cutting-off machine (3), using the same blades (43) both to form the individual groups (20) and to transfer the groups (20) to the conveyor (6), and positioning the conveyor (6) immediately downstream of the unit (4) provided with the blades (43).

In practice, the details of execution can however vary in an equivalent manner as regards the elements described and illustrated, without thereby departing from the solution described above and therefore remaining within the limits of the protection granted by this patent in accordance with the attached claims.

## Claims

1. System for packaging groups (20) of paper rolls (2) obtained by cutting paper logs (L) with a cutting-off machine (3), comprising a cutting-off machine (3) having a predetermined number of channels (30) in which the logs (L) are moved along a predetermined advancement direction (PL) and a cutting unit that cuts the logs in a transverse direction with respect to said direction (PL) producing rolls (2) according to a predetermined cutting rate, the cut determining the formation of a rear base and a front base for each roll (2), said rear and front bases being vertically oriented, i.e. oriented orthogonally to the longitudinal axis of the rolls (2), wherein the rolls (2) produced by the cutting-off machine (3) exit from the latter along exit lines (L1, L2, L3, L4) whose number is equal to the number of said channels (30) and that are oriented each parallel to said direction (PL), and each group (20) consists of a predetermined number of rolls (2) obtained from a same log (L) and positioned close to each other and one behind the other and aligned along the advancement direction (PL) of the logs (L) from which the rolls are obtained, the system further comprising, downstream of the cutting-off machine (3),
- a first unit (1) adapted to arrange the individual rolls (2) spaced apart from each other by a predetermined amount (d) along the respective exit lines (L1, L2, L3, L4), said first unit being provided with a surface (10) on which the rolls (2) are positioned one at a time when they exit from the cutting machine (3) and that moves them along their respective exit lines (L1, L2, L3, L4), distancing each roll (2) from the one following it in the respective exit line, **characterized in that**,
the first unit (1) comprises a plurality of conveyor belts (10) mounted downstream of the cutting-off machine (3) and each conveyor belt (10) has always a section in correspondence of a respective rolls (2) exit line of the cutting-off machine (3); and **in that** the system further comprising, downstream of the cutting-off machine (3),
- a second unit (4), cooperating with the first unit (1), adapted to form the groups (20) by grouping a predetermined number of rolls (2) previously spaced by the first unit (1) in order to produce groups (20) of rolls (2) each consisting of a predetermined number of rolls (2) possibly placed one behind the other, said second unit comprising a transit surface (40) on which the rolls (2) coming from the first unit (1) are subject to slowdown, said second unit (4) being provided with blades (43) connected with respective independent actuators (42) that move them along an annular path that has always a section that is parallel to said transit surface on which the rolls are free to pass, such that each blade (43) is adapted to push from the back the last roll of each group to be formed and each formed group as the individual groups are formed by exerting a pushing action on the rear base of said last roll while the front base and a lateral surface of each roll (2) are free;
- a third unit (6), located downstream of the second unit (4) in relation to said direction (PL), adapted to convey the groups (20) towards a packaging machine (5) provided downstream and adapted to receive the groups (20) formed by the second unit (4); and **in that**
- said transit surface being downstream of said conveyor belts (10);
- said blades (43) being arranged above said conveyor belts (10) and above the transit surface (40), and
- the blades (43) being driven by the independent actuators along annular trajectories above each conveyor belt (10) and can be operated by said independent actuators with differentiated speeds above the conveyor belts (10) and the transit surface (40).

2. System according to claim 1 **characterized in that** on each exit line (L1, L2, L3, L4) there is never accumulation, i.e. stopping, of rolls (2) in number greater than the number of rolls making up a corresponding group.

3. System according to claim 1 **characterized in that** the cutting machine (3) is fed with trimmed logs (L).

4. System according to claim 1 **characterized in that** the movement of the logs (L) in the respective channels (30) of the cutting machine (3) is an intermittent movement and, said "Tt" the time that elapses between two subsequent cuts normally carried out by the cutting unit of the cutting machine, and said "Ts" the time required to stop the movement of the logs, is: Ts<Tt.

5. System according to claim 1 **characterized in that** said trajectories are triangular trajectories.

6. System according to any of the previous claims **characterized in that** a conveyor belt (402) is provided between the second unit (4) and the conveyor (6).

7. System according to claim 1 **characterized in that** it is an integrated system in which a single controller controls the cutting-off machine, the first unit, the second unit and the third unit.

8. Operating method for packaging groups (20) of paper rolls using a system according to any of claims 1-7, wherein each group (20) is made by a predetermined number of rolls (2) obtained by a same log (L) and arranged one behind the other if said predetermined number is higher than one, the method comprising the following steps:
- by using the cutting-off machine (3), paper rolls (2) are produced by transverse cutting of logs (L) of paper material according to a predetermined cutting rate and the rolls of paper (2) thus produced come out of the cutting machine (3) along several parallel exit lines (L1, L2, L3, L4), the cut determining the formation of a rear base and a front base for each roll (2), said rear and front bases being vertically oriented, i.e. oriented orthogonally to the longitudinal axis of the rolls (2);
- immediately downstream of the cutting-off machine (3) each paper roll (2) is spaced by a preset value (d) from the paper roll that follows it in the respective exit line (L1, L2, L3, L4);
- on each exit line (L1, L2, L3, L4) groups (20) are formed by means of a blade (43) which exerts a thrust on the last roll of the group;
- each group (20) is transferred to a conveyor (6; 402) by means of the same blade (43) used for forming the group;
- by means of the conveyor (6) the groups (20) are transferred to a packaging machine (5).

9. Operating method according to claim 8 **characterized in that** on each exit line (L1, L2, L3, L4) there is never accumulation, i.e. stopping, of rolls (2) in number greater than the number of rolls making up a corresponding group.

10. Operating method according to claim 8 **characterized in that** the cutting machine (3) is fed with trimmed logs (L).

11. Operating method according to claim 8 **characterized in that** it implies an intermittent movement of the logs (L) in the cutting machine (3) and, said "Tt" the time that elapses between two subsequent cuts normally carried out by the cutting unit of the cutting machine, and said "Ts" the time required to stop the movement of the logs, is: Ts<Tt.

## Patentansprüche

1. System zum Verpacken von Gruppen (20) von Papierrollen (2), die durch Schneiden von Papierstämmen (L) mit einer Abschneidmaschine (3) erhalten werden, umfassend eine Abschneidmaschine (3) mit einer vorbestimmten Anzahl von Kanälen (30), in denen die Stämme (L) entlang einer vorbestimmten Vorlaufrichtung (PL) bewegt werden, und eine Schneideinheit, die die Stämme in einer Querrichtung in Bezug auf die Richtung (PL) schneidet und Rollen (2) gemäß einer vorbestimmten Schnittgeschwindigkeit erzeugt, wobei der Schnitt die Bildung einer hinteren Basis und einer vorderen Basis für jede Rolle (2) bestimmt, wobei die hinteren und vorderen Basen vertikal orientiert sind, d. h. orthogonal zu der Längsachse der Rollen (2) orientiert sind, wobei die von der Abschneidmaschine (3) erzeugten Rollen (2) aus der Letzteren entlang der Austrittslinien (L1, L2, L3, L4) austreten, deren Anzahl gleich der Anzahl der Kanäle (30) ist und die jeweils parallel zu der Richtung (PL) orientiert sind, und jede Gruppe (20) aus einer vorbestimmten Anzahl von Rollen (2) besteht, die aus demselben Stamm erhalten werden (L) und nahe zueinander und hintereinander positioniert und entlang der Vorlaufrichtung (PL) der Stämme (L), woraus die Rollen erhalten werden, ausgerichtet sind, wobei das System ferner, stromabwärts der Abschneidmaschine (3), umfasst
- eine erste Einheit (1), die dazu ausgelegt ist, die einzelnen Rollen (2) um einen vorbestimmten Betrag (d) voneinander beabstandet entlang der jeweiligen Austrittslinien (L1, L2, L3, L4) anzuordnen, wobei die erste Einheit mit einer Oberfläche (10) versehen ist, auf der die Rollen (2) eine auf einmal positioniert werden, wenn sie aus der Schneidmaschine (3) austreten, und die sie entlang ihrer jeweiligen Austrittslinien (L1, L2, L3, L4) bewegt, wobei jede Rolle (2) von der ihr in der jeweiligen Austrittslinie folgenden distanziert wird, **dadurch gekennzeichnet, dass**
die erste Einheit (1) eine Vielzahl von Förderbändern (10) umfasst, die stromabwärts der Abschneidmaschine (3) montiert sind, und jedes Förderband (10) immer einen Abschnitt entsprechend einer jeweiligen Rollen- (2) Austrittslinie der Abschneidmaschine (3) aufweist; und dadurch, dass das System ferner, stromabwärts der Abschneidmaschine (3), umfasst
- eine zweite Einheit (4), die mit der ersten Einheit (1) zusammenwirkt, die dazu ausgelegt ist, die Gruppen (20) durch Gruppieren einer vorbestimmten Anzahl von Rollen (2) zu bilden, die zuvor durch die erste Einheit (1) beabstandet wurden, um Gruppen (20) von Rollen (2) zu erzeugen, die jeweils aus einer vorbestimmten Anzahl von Rollen (2) bestehen, die möglicherweise hintereinander platziert sind, wobei die zweite Einheit eine Transitfläche (40) umfasst, auf der die aus der ersten Einheit (1) kommenden Rollen (2) einer Verlangsamung ausgesetzt sind, wobei die zweite Einheit (4) mit Messern (43) versehen ist, die mit jeweiligen unabhängigen Aktoren (42) verbunden sind, die sie entlang eines ringförmigen Wegs bewegen, der immer einen Abschnitt aufweist, der parallel zu der Transitfläche ist, worauf die Rollen frei passieren können, sodass jedes Messer (43) dazu ausgelegt ist, die letzte Rolle jeder zu bildenden Gruppe und jede gebildete Gruppe von der Rückseite zu schieben, während die einzelnen Gruppen gebildet werden, indem eine Schubwirkung auf die hintere Basis der letzten Rolle ausgeübt wird, während die vordere Basis und eine Seitenfläche jeder Rolle (2) frei sind;
- eine dritte Einheit (6), die stromabwärts der zweiten Einheit (4) in Bezug auf die Richtung (PL) angeordnet ist, die dazu ausgelegt ist, die Gruppen (20) hin zu einer Verpackungsmaschine (5) zu befördern, die stromabwärts bereitgestellt und dazu ausgelegt ist, die von der zweiten Einheit (4) gebildeten Gruppen (20) aufzunehmen; und dadurch, dass
- die Transitfläche stromabwärts der Förderbänder (10) ist;
- die Messer (43) oberhalb der Förderbänder (10) und oberhalb der Transitfläche (40) angeordnet sind, und
- die Messer (43) von den unabhängigen Aktoren entlang ringförmiger Bahnen oberhalb jedes Förderbands (10) angetrieben werden und von den unabhängigen Aktoren mit differenzierten Geschwindigkeiten oberhalb der Förderbänder (10) und der Transitfläche (40) betrieben werden können.

2. System nach Anspruch 1, **dadurch gekennzeichnet, dass** auf jeder Austrittslinie (L1, L2, L3, L4) niemals eine Ansammlung, d. h. ein Anhalten, von Rollen (2) in einer Anzahl gegeben ist, die größer als die Anzahl der eine entsprechende Gruppe bildenden Rollen ist.

3. System nach Anspruch 1, **dadurch gekennzeichnet, dass** die Schneidmaschine (3) mit beschnittenen Stämmen (L) beschickt wird.

4. System nach Anspruch 1, **dadurch gekennzeichnet, dass** die Bewegung der Stämme (L) in den jeweiligen Kanälen (30) der Schneidmaschine (3) eine intermittierende Bewegung ist und "Tt" die Zeit ist, die zwischen zwei aufeinanderfolgenden Schnitten vergeht, die normalerweise von der Schneideinheit der Schneidmaschine ausgeführt werden, und dass "Ts" die Zeit ist, die zum Anhalten der Bewegung der Stämme erforderlich ist, wobei gilt: Ts<Tt.

5. System nach Anspruch 1, **dadurch gekennzeichnet, dass** die Bahnen dreieckige Bahnen sind.

6. System nach einem der vorhergehenden Ansprüche, **dadurch gekennzeichnet, dass** ein Förderband (402) zwischen der zweiten Einheit (4) und dem Förderer (6) vorgesehen ist.

7. System nach Anspruch 1, **dadurch gekennzeichnet, dass** es ein integriertes System ist, in dem eine einzige Steuerung die Abschneidmaschine, die erste Einheit, die zweite Einheit und die dritte Einheit steuert.

8. Betriebsverfahren zum Verpacken von Gruppen (20) von Papierrollen unter Verwendung eines Systems nach einem der Ansprüche 1-7, wobei jede Gruppe (20) aus einer vorbestimmten Anzahl von Rollen (2) besteht, die aus dem gleichen Stamm (L) erhalten werden und hintereinander angeordnet sind, wenn die vorbestimmte Anzahl größer als eins ist, wobei das Verfahren die folgenden Schritte umfasst:
- durch Verwendung der Abschneidmaschine (3) werden Papierrollen (2) durch Querschneiden von Stämmen (L) aus Papiermaterial gemäß einer vorbestimmten Schnittgeschwindigkeit hergestellt und
die somit hergestellten Papierrollen (2) verlassen die Schneidmaschine (3) entlang mehrerer paralleler Austrittslinien (L1, L2, L3, L4), wobei der Schnitt die Bildung einer hinteren Basis und einer vorderen Basis für jede Rolle (2) bestimmt, wobei die hinteren und vorderen Basen vertikal orientiert sind, d. h. orthogonal zu der Längsachse der Rollen (2) orientiert sind;
- unmittelbar stromabwärts der Abschneidmaschine (3) wird jede Papierrolle (2) um einen vorgewählten Wert (d) von der Papierrolle bestandet, die ihr in der jeweiligen Austrittslinie (L1, L2, L3, L4) folgt;
- auf jeder Austrittslinie (L1, L2, L3, L4) werden Gruppen (20) mittels eines Messers (43) gebildet, das einen Schub auf die letzte Rolle der Gruppe ausübt;
- jede Gruppe (20) wird mittels desselben Messers (43), das zur Bildung der Gruppe verwendet wurde, an einen Förderer (6; 402) übertragen;
- mittels des Förderers (6) werden die Gruppen (20) an eine Verpackungsmaschine (5) übertragen.

9. Betriebsverfahren nach Anspruch 8, **dadurch gekennzeichnet, dass** auf jeder Austrittslinie (L1, L2, L3, L4) niemals eine Ansammlung, d. h. ein Anhalten, von Rollen (2) in einer Anzahl gegeben ist, die größer als die Anzahl der eine entsprechende Gruppe bildenden Rollen ist.

10. Betriebsverfahren nach Anspruch 8, **dadurch gekennzeichnet, dass** die Schneidmaschine (3) mit beschnittenen Stämmen (L) beschickt wird.

11. Betriebsverfahren nach Anspruch 8, **dadurch gekennzeichnet, dass** es eine intermittierende Bewegung der Stämme (L) in der Schneidmaschine (3) impliziert und dass "Tt" die Zeit ist, die zwischen zwei aufeinanderfolgenden Schnitten vergeht, die normalerweise von der Schneideinheit der Schneidmaschine ausgeführt werden, und dass "Ts" die Zeit ist, die zum Anhalten der Bewegung der Stämme erforderlich ist, wobei gilt: Ts<Tt.

## Revendications

1. Système pour emballer des groupes (20) de rouleaux de papier (2) obtenus en coupant des bûches de papier (L) avec une machine de découpe (3), comprenant une machine de découpe (3) comportant un nombre prédéfini de canaux (30) dans lesquels les bûches (L) sont déplacées le long d'une direction d'avancement prédéfinie (PL) et une unité de coupe qui coupe les bûches dans une direction transversale par rapport à ladite direction (PL) produisant des rouleaux (2) selon une vitesse de coupe prédéfinie, la coupe déterminant la formation d'une base arrière et d'une base avant pour chaque rouleau (2), lesdites bases arrière et avant étant orientées verticalement, c'est-à-dire orientées orthogonalement à l'axe longitudinal des rouleaux (2), lesdits rouleaux (2) produits par la machine de découpe (3) sortant de cette dernière le long de lignes de sortie (L1, L2, L3, L4) dont le nombre est égal au nombre desdits canaux (30) et qui sont orientées chacune parallèlement à ladite direction (PL), et chaque groupe (20) étant constitué d'un nombre prédéfini de rouleaux (2) obtenus à partir d'une même bûche (L) et positionnés à proximité les uns des autres et les uns derrière les autres et alignés le long de la direction d'avancement (PL) des bûches (L) à partir desquels les rouleaux sont obtenus, le système comprenant en outre, en aval de la machine de découpe (3),
- une première unité (1) adaptée pour agencer les rouleaux individuels (2) espacés les uns des autres d'une quantité prédéfinie (d) le long des lignes de sortie respectives (L1, L2, L3, L4), ladite première unité étant pourvue d'une surface (10) sur laquelle les rouleaux (2) sont positionnés un à la fois lorsqu'ils sortent de la machine de coupe (3) et qui les déplace le long de leurs lignes de sortie respectives (L1, L2, L3, L4), en éloignant chaque rouleau (2) de celui qui le suit dans la ligne de sortie respective, **caractérisé en ce que**,
la première unité (1) comprend une pluralité de bandes transporteuses (10) montées en aval de la machine de découpe (3) et chaque bande transporteuse (10) comporte toujours une section en correspondance avec une ligne de sortie respective des rouleaux (2) de la machine de découpe (3) ; et **en ce que** le système comprend en outre, en aval de la machine de découpe (3),
- une deuxième unité (4), coopérant avec la première unité (1), adaptée pour former les groupes (20) en regroupant un nombre prédéfini de rouleaux (2) précédemment espacés par la première unité (1) afin de produire des groupes (20) de rouleaux (2) constitués chacun d'un nombre prédéfini de rouleaux (2) éventuellement placés les uns derrière les autres, ladite deuxième unité comprenant une surface de transit (40) sur laquelle les rouleaux (2) provenant de la première unité (1) sont soumis à ralentissement, ladite deuxième unité (4) étant pourvue de lames (43) reliées à des actionneurs indépendants respectifs (42) qui les déplacent le long d'un trajet annulaire qui comporte toujours une section parallèle à ladite surface de transit sur laquelle les rouleaux sont libres de passer, de sorte que chaque lame (43) soit adaptée pour pousser à partir de l'arrière le dernier rouleau de chaque groupe à former et chaque groupe formé au fur et à mesure que les groupes individuels sont formés en exerçant une action de poussée sur la base arrière dudit dernier rouleau pendant que la base avant et une surface latérale de chaque rouleau (2) est libre ;
- une troisième unité (6), située en aval de la deuxième unité (4) par rapport à ladite direction (PL), adaptée pour transporter les groupes (20) vers une machine d'emballage (5) prévue en aval et adaptée pour recevoir les groupes (20) formés par la deuxième unité (4) ; et **en ce que**
- ladite surface de transit est en aval desdites bandes transporteuses (10) ;
- lesdites lames (43) sont agencées au-dessus desdites bandes transporteuses (10) et au-dessus de la surface de transit (40), et
- les lames (43) sont entraînées par les actionneurs indépendants le long de trajectoires annulaires au-dessus de chaque bande transporteuse (10) et peuvent être actionnées par lesdits actionneurs indépendants avec des vitesses différenciées au-dessus des bandes transporteuses (10) et de la surface de transit (40).

2. Système selon la revendication 1, **caractérisé en ce que** sur
chaque ligne de sortie (L1, L2, L3, L4), aucune accumulation, c'est-à-dire d'arrêt, de rouleaux (2) en nombre supérieur au nombre de rouleaux constituant un groupe correspondant ne se produit jamais.

3. Système selon la revendication 1 **caractérisé en ce que** la machine de coupe (3) est alimentée en bûches taillées (L).

4. Système selon la revendication 1 **caractérisé en ce que** le mouvement des bûches (L) dans les canaux respectifs (30) de la machine de coupe (3) est un mouvement intermittent et, ledit « Tt » étant le temps qui s'écoule entre deux coupes consécutives normalement effectuées par l'unité de coupe de la machine de coupe, et ledit « Ts » étant le temps nécessaire pour arrêter le mouvement des bûches, est selon la relation : Ts < Tt.

5. Système selon la revendication 1 **caractérisé en ce que** lesdites trajectoires sont des trajectoires triangulaires.

6. Système selon l'une quelconque des revendications précédentes, **caractérisé en ce qu'**une bande transporteuse (402) est prévue entre la deuxième unité (4) et le transporteur (6).

7. Système selon la revendication 1, **caractérisé en ce que** le système est un système intégré dans lequel un seul dispositif de commande commande la machine de découpe, la première unité, la deuxième unité et la troisième unité.

8. Procédé de fonctionnement permettant l'emballage de groupes (20) de rouleaux de papier à l'aide d'un système selon l'une quelconque des revendications 1-7, chaque groupe (20) étant constitué d'un nombre prédéfini de rouleaux (2) obtenus par une même bûche (L) et agencés les uns derrière les autres si ledit nombre prédéfini est supérieur à un, le procédé comprenant les étapes suivantes :
- à l'aide de la machine de découpe (3), les rouleaux de papier (2) sont produits par découpe transversale de bûches (L) de matériau en papier selon une vitesse de coupe prédéfinie et
les rouleaux de papier (2) ainsi produits sortent de la machine de coupe (3) le long de plusieurs lignes de sortie parallèles (L1, L2, L3, L4), la coupe déterminant la formation d'une base arrière et d'une base avant pour chaque rouleau (2), lesdites bases arrière et avant étant orientées verticalement, c'est-à-dire orientées orthogonalement à l'axe longitudinal des rouleaux (2) ;
- immédiatement en aval de la machine de découpe (3), chaque rouleau de papier (2) étant espacé d'une valeur prédéfinie (d) du rouleau de papier qui le suit dans la ligne de sortie respective (L1, L2, L3, L4) ;
- sur chaque ligne de sortie (L1, L2, L3, L4), des groupes (20) sont formés au moyen d'une lame (43) qui exerce une poussée sur le dernier rouleau du groupe ;
- chaque groupe (20) est transféré sur un transporteur (6 ; 402) au moyen de la même lame (43) utilisée pour former le groupe ;
- au moyen du transporteur (6), les groupes (20) sont transférés vers une machine d'emballage (5).

9. Procédé de fonctionnement selon la revendication 8, **caractérisé en ce que**
sur chaque ligne de sortie (L1, L2, L3, L4), aucune accumulation, c'est-à-dire d'arrêt, de rouleaux (2) en nombre supérieur au nombre de rouleaux constituant un groupe correspondant ne se produit jamais.

10. Procédé de fonctionnement selon la revendication 8 **caractérisé en ce que** la machine de coupe (3) est alimentée en bûches taillées (L).

11. Procédé de fonctionnement selon la revendication 8 **caractérisé en ce qu'**il implique un mouvement intermittent des bûches (L) dans la machine de coupe (3) et, ledit « Tt » étant le temps qui s'écoule entre deux coupes consécutives normalement effectuées par l'unité de coupe de la machine de coupe, et ledit « Ts » étant le temps nécessaire pour arrêter le mouvement des rondins, est selon la relation : Ts < Tt.
